# EUROPÄISCHE PATENTSCHRIFT

(11) **EP 0 564 523 B1**
(45) Veröffentlichungstag und Bekanntmachung des Hinweises auf die Patenterteilung: **05.06.1996**
(21) Anmeldenummer: 92901783.8
(22) Anmeldetag: 31.12.1991
(51) Int. Cl.: B62M 23/00, B62M 17/00

(54) **FAHRRAD, INSBESONDERE GELÄNDEGÄNGIGES FAHRRAD**
BICYCLE, IN PARTICULAR AN ALL-TERRAIN BICYCLE
BICYCLETTE, EN PARTICULIER BICYCLETTE TOUT-TERRAIN

(30) Priorität: 02.01.1991 AT 3/91
(43) Veröffentlichungstag der Anmeldung: 13.10.1993
(60) Teilanmeldung: 95116839.2
(73) Patentinhaber: SCHWARZENBACHER, Rudolf, A-5602 Kleinarl (AT)
(72) Erfinder: SCHWARZENBACHER, Rudolf, A-5602 Kleinarl (AT)
(74) Vertreter: Secklehner, Günter, Dr.
(86) Internationale Anmeldenummer: AT9100142
(87) Internationale Veröffentlichungsnummer: WO9212043

(56) Entgegenhaltungen:
- FR-A- 2 574 744
- FR-A- 2 656 847
- GB-A- 2 138 894
- US-A- 3 045 772
- US-A- 3 268 025
- US-A- 4 895 385

## Beschreibung

Die Erfindung betrifft ein Fahrrad, insbesondere ein geländegängiges Fahrrad, wie es im Oberbegriff des Patentanspruches 1 beschrieben ist.

Nach einer aus der DE-A-33 19 105 bekannten Ausführung eines Fahrzeuges ist ein gemeinsamer Allradantrieb für Zweirad- und ähnliche Fahrzeuge mit einem Wechselgetriebe am Antriebsort zur gleichmäßigen Verteilung der Antriebskraft auf mehrere Antriebsräder gebildet. Weiters weist diese bekannte Ausbildung entsprechende Antriebselemente zur Kraftübertragung und weiters im Antriebsstrang zu einem lenkbaren Antriebsrad ein Lenkbewegungs-Ausgleichsgetriebe auf, um unabhängig von der Lenkstellung dieses Rad mit der Antriebskraft zu beaufschlagen. Die Übertragung der an einer zentralen Stelle über einem Pendelhub der Pedalhebel oder eines Motors entstehenden Antriebskraft auf die Antriebsräder erfolgt über eine Vielzahl von Getriebewellen, konzentrischen Zahnringen, Kegelzahnrädern des Wechselgetriebes und teilweise im Rahmen gelagerten Übertragungswellen unter Zwischenschaltung des sehr aufwendigen, eine Vielzahl von aufwendigen Maschinenelementen umfassenden Lenkbewegungs-Ausgleichsgetriebes. Nachteilig wirkt sich bei dieser Ausbildung das durch die Vielzahl der Maschinenelemente bedingte hohe Gewicht aus, sowie das Erfordernis nach einer zentralen Schalteinrichtung, mittels der ein Synchronlauf der Antriebsräder bei einer gleichmäßigen Verteilung der Antriebskraft auf die Antriebsräder erreicht wird.

Der vorliegenden Erfindung liegt nunmehr die Aufgabe zugrunde, ein Fahrrad, insbesondere geländegängiges Fahrrad zu schaffen, bei dem das Hinterrad und das Vorderrad wahlweise gemeinsam angetrieben werden können, und bei dem die Antriebsanordnungen eine geringe Anzahl von Antriebselementen erfordern.

Diese Aufgabe der Erfindung wird durch die im kennzeichnenden Teil des Patentanspruches 1 wiedergegebenen Merkmale gelöst. Der überraschende Vorteil dieser einfach erscheinenden Lösung liegt nunmehr darin, daß die Drehbewegung des Vorderrades, die über die Antriebsordnung vom Hinterrad auf das Vorderrad übertragen wird, in Abstimmung der über die Schalteinrichtung zwischen dem Tretkurbeltrieb und dem Hinterrad gewählten Übersetzung erfolgt. Damit ist eine exakte Abstimmung der Rotationsgeschwindigkeit des Vorder- und Hinterrades in jedem Betriebsfall gegeben. Dadurch wird verhindert, daß es durch unterschiedliche Rotationsgeschwindigkeit des Vorder- und Hinterrades über die Antriebsvorrichtung bzw. die Antriebsanordnung zu einem Blockieren kommt oder daß eines der beiden Räder über eine Freilaufanordnung von der Antriebsvorrichtung bzw. der Antriebsanordnung entkuppelt werden muß, wodurch somit in diesem Betriebszustand dann keine Kraftübertragung über beide Räder erfolgen könnte. Dadurch wird vor allem für den Extremeinsatz bei einer derartigen Anordnung der Antriebsvorrichtung und Antriebsanordnung für das Hinter- bzw. Vorderrad sichergestellt, daß in jedem Fall eine Zug- bzw. Vortriebskraft, wie auch Bremskräfte über beide Räder, nämlich das Hinterrad und das Vorderrad, erfolgen kann, wodurch eine hohe Führungsstabilität, insbesondere bei schwierigen Fahrbahnbeschaffenheiten, gegeben ist.

Möglich ist eine andere Ausbildung nach Patentanspruch 2, wodurch eine Beeinträchtigung der Schwenkbewegung des Vorderrades beim Lenken eines derartigen Fahrzeuges wirkungsvoll vermieden wird und die Antriebskraft auch bei einer großen Relativverschwenkung des Vorderrades zum Hinterrad auf das Vorderrad erfolgen kann.

Möglich ist eine vorteilhafte Weiterbildung nach Patentanspruch 3. Dadurch kann eine mehrfach Umlenkung der Übertragungsmittel vermieden werden, wodurch eine technisch einfache Lösung für den Allradantrieb, die sich auch wirtschaftlich herstellen läßt, erreicht werden kann.

Von Vorteil ist aber auch eine weitere Ausführungsform nach Patentanspruch 4, weil dadurch bereits im Betrieb bewährte Antriebselemente für den Antrieb des Vorderrades eingesetzt werden können, wodurch kostenintensive Sonderbauteile entfallen und damit der Allradantrieb wirtschaftlich hergestellt werden kann.

Vorteilhaft ist aber auch eine Ausgestaltung nach Patentanspruch 5, weil dadurch hohe Drehmomente, wie sie insbesondere bei Geländefahrten auftreten störungsfrei übertragen werden können.

Eine andere Ausführungsvariante ist im Patentanspruch 6 beschrieben, wodurch sich die Antriebsanordnung für das Vorderrad wahlweise weggeschaltet werden kann, um z.B. beim Betrieb des Fahrrades im ebenen Gelände bzw. auf befestigtem Untergrund die Reibungsverluste, die bei einer größeren Anzahl von Antriebselementen höher sind, zu vermindern.

Möglich ist auch eine Ausbildung nach Patentanspruch 7, wodurch die Antriebselemente mit den Antriebsachsen nur bei Auftreten einer Antriebsleistung gekuppelt sind und die Antriebsanordnung, z.B. beim Bergabfahren nicht mitbewegt wird.

Es ist auch eine Ausbildung nach Patentanspruch 8 von Vorteil, wodurch ein Schutz des Betreibers des Fahrrades vor dem bewegten Antriebsmitteln erreicht werden kann.

Möglich ist auch eine Ausbildung nach Patentanspruch 9, weil dadurch für das Übertragungsmittel eine verschleißfreie und geringe Antriebsverluste aufweisende Führung erreicht wird.

Vorteilhaft ist auch eine Ausbildung nach Patentanspruch 10, wodurch die Montage der Antriebsanordnung keine zusätzlichen Befestigungselemente erfordert und sehr einfach ohne Spezialwerkzeuge durchgeführt werden kann.

Eine weitere vorteilhafte Ausbildung beschreibt Patentanspruch 11, weil dadurch eine sehr kompakte Baueinheit für die Antriebsanordnung des Vorderrades erreicht wird.

Von Vorteil ist aber auch eine Ausbildung nach Patentanspruch 12, weil dadurch beim Bergabfahren die Übertragungsmittel für das Vorderrad stillstehen und Reibungsverluste vermieden werden.

Schließlich ist aber auch eine Ausbildung nach Patentanspruch 13 vorteilhaft, wodurch die für den Antrieb erforderlichen Zusatzelemente in relativ geringer Höhe über der Aufstandsfläche am Rahmen gehaltert sind, und damit eine Erhöhung der Lage des Gesamtschwerpunktes vermieden und damit ein sicherer Betrieb des Fahrrades erreicht wird.

Zum besseren Verständnis der Erfindung wird diese anhand der in den Zeichnungen dargestellten Ausführungsbeispiele näher erläutert.

Es zeigen:
- Fig. 1: ein erfindungsgemäßes Fahrrad mit einer zusätzlichen Antriebsanordnung für das Vorderrad in Seitenansicht;
- Fig. 2: eine erfindungsgemäße Übertragungsvorrichtung der Antriebsvorrichtung nach Fig. 1 in schematischer schaubildlicher Darstellung;
- Fig. 3: die erfindungsgemäße Antriebsvorrichtung für das Vorderrad mit der Übertragungsvorrichtung gemäß Fig. 2 in Seitenansicht;
- Fig. 4: die erfindungsgemäße Antriebsvorrichtung in Stirnansicht, geschnitten, gemäß den Linien IV-IV in Fig. 3;
- Fig. 5: eine weitere Variante einer erfindungsgemäßen Antriebsanordnung für ein Fahrrad von vorne in Ansicht;
- Fig. 6: eine Detailansicht einer anderen Ausführungsvariante der Antriebsanordnung in vereinfachter, schematischer Darstellung;
- Fig. 7: eine erfindungsgemäße Führungsanordnung für die Antriebsanordnung, teilweise geschnitten;
- Fig. 8: eine weitere Variante der erfindungsgemäßen Antriebsanordnung in schematischer Darstellung.

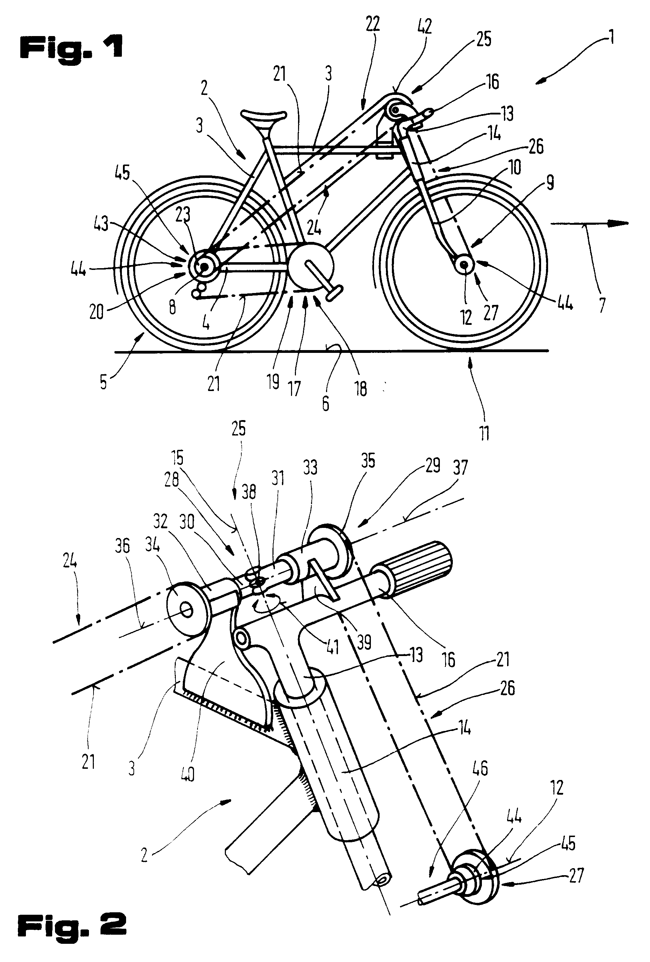

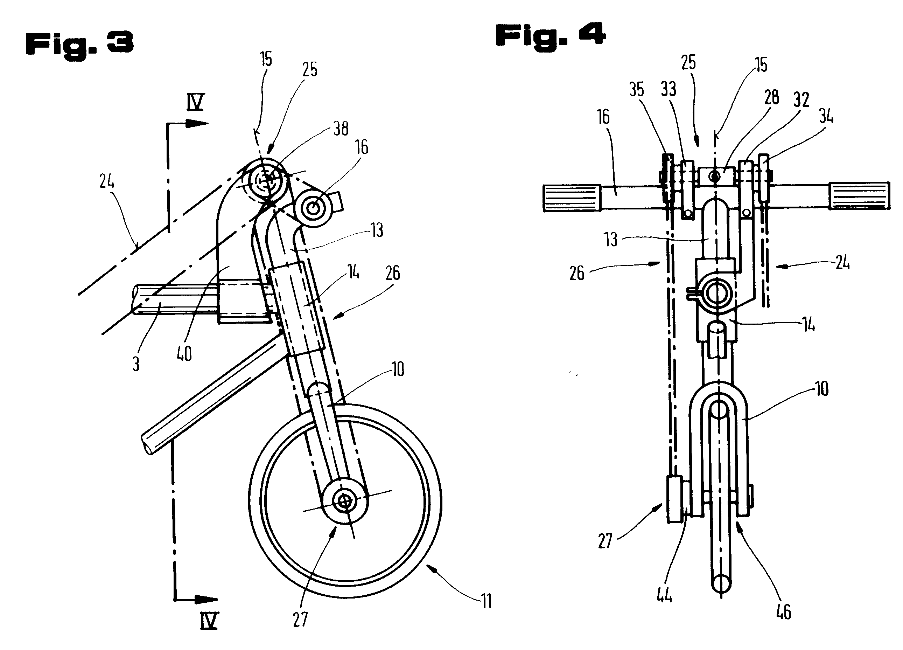

In Fig. 1 bis 4 ist ein Fahrrad 1 gezeigt. Das Fahrrad 1 wird aus einem Rahmen 2, insbesondere aus rohrförmigen Rahmenteilen 3,4 welche an Knotenpunkten miteinander verschweißt oder verlötet, sind, gebildet. In Aufnahmen des gabelförmigen Rahmenteiles 4 ist ein Hinterrad 5 um eine zu einer Aufstandsfläche 6 waagrecht und im Bezug auf eine Fahrtrichtung - Pfeil 7 - senkrecht verlaufend angeordnete Achse 8 drehbar gelagert.

In einer Aufnahme 9 eines gabelförmigen Rahmenteiles 10 ist ein Vorderrad 11 um eine parallel zur Achse 8 angeordneten Achse 12 drehbar gelagert. Der gabelförmige Rahmenteil 10 weist in zur Aufstandsfläche 6 entgegengesetzter Richtung einen zylindrischen Fortsatz 13 auf, der in einem in etwa vertikal angeordneten rohrförmigen Rahmenteil 14 um eine Schwenkachse 15 drehbar gelagert ist. Zur Durchführung einer Schwenkbewegung um die Schwenkachse 15 weist der Fortsatz 13 eine Lenkstange 16 auf, welche in etwa parallel zur Aufstandsfläche 6 auf dem Fortsatz 13 befestigt ist.

Das Fahrrad 1 weist in bekannter Weise eine Antriebsanordnung 17 für das Hinterrad 5 auf, welche durch einen Tretkurbeltrieb 18, Übertragungsmittel 19 und Antriebselemente 20 gebildet ist. Das Übertragungsmittel 19 wird in bevorzugter Weise durch eine Rollenkette 21 gebildet. Der Tretkurbeltrieb 18 und das Antriebselement 20 weisen Zahnräder, -scheiben, -kränze, etc. auf. Weiters umfaßt die Antriebsanordnung 17 eine Schalteinrichtung zur Veränderung des Übersetzungsverhältnisses zwischen dem Tretkurbeltrieb 18 und dem Hinterrad 5. Eine solche Schalteinrichtung, bei welcher durch Umlegen der Rollenkette 21 zwischen unterschiedlichen Zahnradpaarungen zwischen dem Tretkurbeltrieb 18 und Antriebselementen 20 des Hinterrades 5 eine Über- bzw. Untersetzungsänderung bewirkt wird, ist z.B. als Shimano-Schaltung Type NEW wie sie bei Fahrrädern, insbesondere Mountainbikes der Firma KTM eingesetzt wird, bekannt. Zwischen dem Hinterrad 5 und dem Vorderrad 11 ist zur Übertragung eines Drehmomentenanteiles des dem Hinterrad 5 über die Antriebsanordnung 17 zugeführten Drehmomentes eine Antriebsanordnung 22 angeordnet. Diese umfaßt ein mit dem Antriebselement 20 drehfest verbundenes Antriebselement 23, ein Übertragungsmittel 24, z.B. eine Rollenkette 21 und eine Übertragungsvorrichtung 25, insbesondere im Bereich der Lenkstange 16, von der die Weiterleitung des Drehmomentes an das Vorderrad 11 über ein, insbesondere endloses Übertragungsmittel 26, z.B. eine Rollenkette 21 auf ein Antriebselement 27 des Vorderrades 11 erfolgt.

In den Fig. 2 bis 4 ist die Übertragungsvorrichtung 25 und deren Anordnung im Bereich der Lenkstange 16 bzw. der Schwenkachse 15 näher gezeigt. Die Übertragungsvorrichtung 25 wird durch ein, ein Kardangelenk 28 aufweisendes Kupplungselement 29 und Kupplungsteilen 30,31 des Kupplungselementes 29 zugeordnete Lagerelemente 32,33 für die drehbewegliche Lagerung der Kupplungsteile 30,31 gebildet. Auf den Kupplungsteilen 30,31 sind mit diesen drehfest verbundene Antriebselemente 34,35, wie Kettenräder für die endlosen Übertragungsmittel 24,26, z.B. den Rollenketten 21, angeordnet. Mittelachsen 36,37 der Kupplungsteile 30,31 bilden mit der Schwenkachse 15 einen gemeinsamen Schnittpunkt 38, wobei die Mittelachsen 36,37 in etwa im rechten Winkel zu der Schwenkachse 15 angeordnet sind. Das den Kupplungsteil 31 lagernde Lagerelement 33 ist über eine Distanzlasche 39 auf der Lenkstange 16 befestigt, während das weitere Lagerelement 32 über eine Distanzlasche 40 am Rahmenteil 3 des Rahmens 2 befestigt ist. Durch die Anordnung des Kardangelenks 28 zwischen den Kupplungsteilen 30,31 und dessen Position in Bezug auf die Schwenkachse 15 kann das Drehmoment unabhängig von einer Schwenkbewegung gemäß einem kreisförmigen - Doppelpfeil 41 - übertragen werden. Anstelle des gezeigten Kardangelenks 28 können auch mehrgelenkige kardanische Kupplungselemente 29 eingesetzt werden um auch größere Schwenkbewegungen des Vorderrades 11 um die Schwenkachse 15 zu ermöglichen. Selbstverständlich können die Übertragungsmittel 24,26 und die Übertragungsvorrichtung 25 mit den Antriebselementen 34,35 innerhalb von Verkleidungselementen 42, wie in Fig. 1 dargestellt, insbesondere aus leichten Kunststoffbauteilen, angeordnet sein.

Die drehfeste Verbindung des Antriebselementes 23 mit einer Hinterradnabe 43 kann über eine bekannte Freilaufeinrichtung 44 bzw. eine ausrückbare Kupplungseinrichtung 45 erfolgen, wodurch die Antriebsanordnung 22 bedarfsweise weg- bzw. zugeschaltet werden kann. Selbstverständlich ist es auch möglich, die Freilaufeinrichtung 44 und bzw. oder die Kupplungseinrichtung 45 zwischen dem Antriebselement 27 und einer Vorderradnabe 46 des Vorderrades 11 anzuordnen.

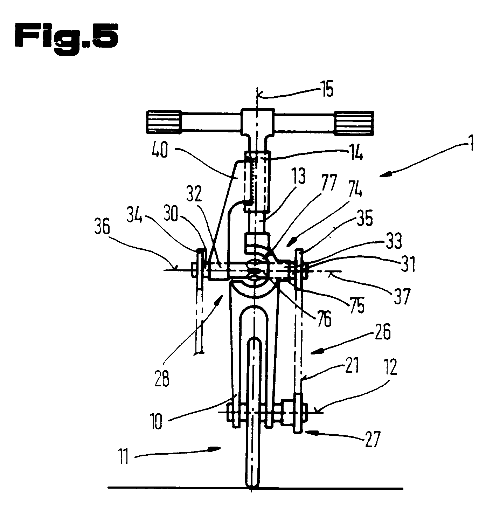

In der Fig. 5 ist eine weitere Variante einer Antriebsanordnung für das Vorderrad 11 eines Fahrrades 1 gezeigt. Der das Vorderrad 11 lagernde gabelförmige Rahmenteil 10 weist in Richtung des im Rahmenteil 14 um die Schwenkachse 15 schwenkbar gelagerten Fortsatzes 13 einen C-förmigen Übergangsbereich 74 auf. Parallel zur Achse 12 des Vorderrades 11 ist in einem Ansatz 75 des C-förmigen Übergangsbereiches 74 das Lagerelement 33 für den Kupplungsteil 31 des Kardangelenkes 28 angeordnet. Auf einem Wellenstummel 76 des Kupplungsteiles 31 ist das Antriebselement 35 befestigt. Am feststehenden Rahmenteil 14 ist über die Distanzlasche 40 das weitere Lagerelement 32 für den Kupplungsteil 30 und das auf diesem befestigten Antriebselement 34 angeordnet, wobei in unverschwenkter Lage des Vorderrades 11 um die Schwenkachse 15 und in Bezug auf eine Längsachse des Fahrrades 1, die Mittelachsen 36,37 der Kupplungsteile 30,31 zueinander fluchtend ausgerichtet sind. In einem durch den C-förmigen Übergangsbereich 74 gebildeten Freiraum 77 ist das die Kupplungsteile 30,31 verbindende Kardangelenk 28 angeordnet, in dessen Mittelpunkt sich die Schwenkachse 15 und die Mittelachsen 36,37 schneiden. Damit erfolgt die Übertragung des Antriebsdrehmomentes über das unverschwenkbar am Rahmenteil 14 befestigte Antriebselement 34 und das Kardangelenk 28 in das um die Schwenkachse 15 verschwenkbare Antriebselement 35 und über das Übertragungsmittel 26 z.B. die Rollenkette 21 in das Antriebselement 27 des Vorderrades 11. Die Anordnung des Kardangelenkes 28 ermöglicht somit die Übertragung des Antriebsdrehmomentes zwischen den beiden relativ zueinander verschwenkbaren Antriebselementen 34,35.

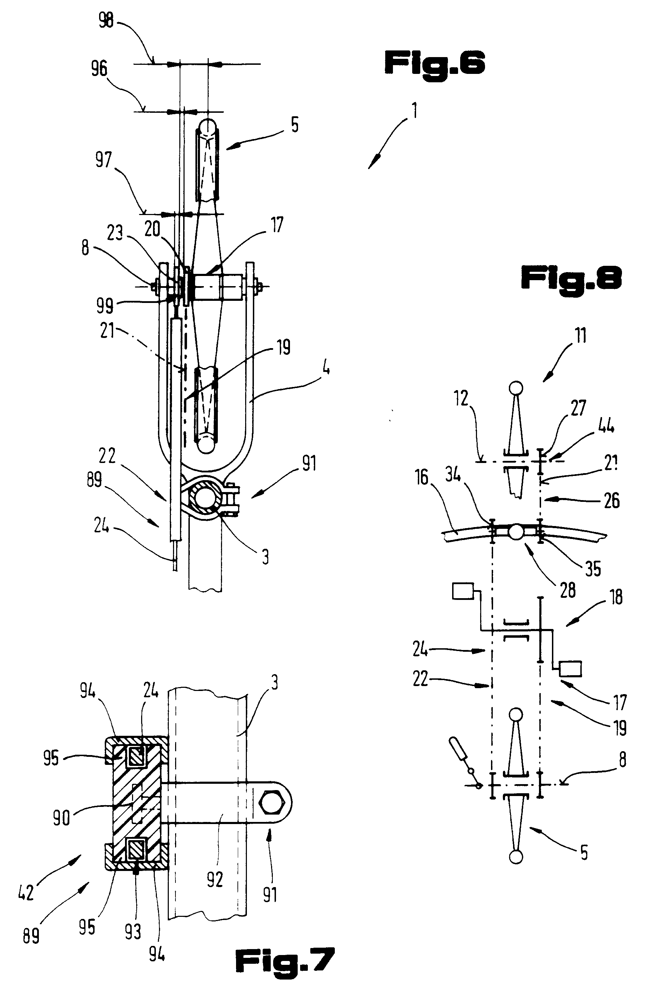

In den Fig. 6 und 7 ist eine weitere Ausführungsvariante der Antriebsanordnung 22 gezeigt. Bei dieser ist eine Führungsanordnung 89 bestehend aus einem I-Profil 90 auf dem Rahmenteil 3 des Fahrrades 1 über Befestigungselemente 91, z.B. Rohrschellen 92 befestigt. In Ausnehmungen 93 des I-Profils 90 ist das Übertragungsmittel 24, z.B. eine Rollenkette 21, Zahnriemen, etc. geführt. Das I-Profil 90 besteht z.B. aus einem abriebfesten Material wie Metall, Kunststoff, faserverstärkten Kunststoff etc., welches gleichzeitig einen geringen Reibungskoeffizienten aufweist, wodurch sich eine hohe Verschleißfestigkeit ergibt wie weiters auch geringe Reibungsverluste auftreten. Die als Längsführung wirkenden Ausnehmungen 93 für das Übertragungsmittel 24 sind z.B. durch U-Profile 94, welche auf Stegen 95 des I-Profils 90 lösbar befestigt sind, z.B. mit diesem verschraubt sind, überdeckt, wodurch diese einen wirkungsvollen Berührungsschutz für den Betreiber des Fahrrades 1 bilden.

Die Antriebsanordnung 17 für das Hinterrad 5 mit dem Übertragungsmittel 19, z.B. der Rollenkette 21 und der Antriebsanordnung 22 mit dem Übertragungsmittel 24 sind in einer parallel zueinander verlaufenden Ebene angeordnet, wobei eine Distanz 96 in etwa einer Breite 97 des Antriebselementes 20 bzw. 23 entspricht. Zweckmäßig ist es dabei, wenn die Antriebsanordnung 22 einen größeren Abstand 98 zum Hinterrad 5 aufweist, als die Antriebsanordnung 17, wodurch ein nachträgliches Ausrüsten des Fahrrades 1 mit der Antriebsanordnung 22 erleichtert wird. Weiters ist von Vorteil, wenn das Antriebselement 23 über eine Freilaufeinrichtung 99 auf der Achse 8 des Hinterrades 5 gelagert ist. Diese an sich bekannte Freilaufeinrichtung 99 gewährleistet die Übertragung eines Antriebsmomentes nur in einer Drehrichtung des Antriebselementes 23 und ermöglichet das Stillsetzen der Antriebsanordnung 22 beim Bergabfahren, d.h., daß in einem solchen Betriebszustand diese und damit das Übertragungsmittel 24 stillsteht, wodurch Übertragungsverluste durch Reibung und erhöhter Verschleiß vermieden werden.

In der Fig. 8 ist ein Antriebsschema einer weiteren Variante der Antriebsanordnung 22 für das Vorderrad 11 gezeigt. Über die Antriebsanordnung 17 wird die auf den Tretkurbeltrieb 18 aufgebrachte Kraft auf das Hinterrad 5 übertragen. Auf der der Antriebsanordnung 17 entgegengesetzten Seite des Hinterrades 5 ist die Antriebsanordnung 22 für das Vorderrad 11 angeordnet und über eine Klauenkupplung wahlweise kraftschlüssig mit dem Hinterrad 5 kuppelbar. Das Übertragungsmittel 24 der Antriebsanordnung 22 bildet dabei die Kraftübertragung zu dem im Bereich der Lenkstange 16 angeordneten Kardangelenk 28. Über das Kardangelenk 28 erfolgt nunmehr der Kraftfluß auf die der Antriebsanordnung 22 entgegengesetzte Seite des Vorderrades 11 und über das Übertragungsmittel 26 auf das Vorderrad 11. Durch die Anordnung der Klauenkupplung kann nunmehr wahlweise vom Betreiber die Antriebsanordnung 22 zur kraftschlüssigen Verbindung zwischen dem Hinterrad 5 und dem Vorderrad 11 zu- bzw. abgeschaltet werden. Selbstverständlich ist es darüberhinaus auch möglich, das mit dem Vorderrad 11 drehbeweglich verbundene Antriebselement 27 mit einer bekannten Freilaufeinrichtung 44 auszustatten.

Zum besseren Verständnis der Erfindung wurden in den Ausführungsbeispielen einzelne Teile in unproportionalen Maßstab verzerrt dargestellt. Des weiteren können auch einzelne der in den Ausführungsbeispielen insgesamt beschriebenen Merkmalskombinationen eigenständige, erfindungsgemäße Lösungen bilden.

### Bezugszeichenaufstellung

- 1: Fahrrad
- 2: Rahmen
- 3: Rahmenteil
- 4: Rahmenteil
- 5: Hinterrad
- 6: Aufstandsfläche
- 7: Pfeil
- 8: Achse
- 9: Aufnahme
- 10: Rahmenteil
- 11: Vorderrad
- 12: Achse
- 13: Fortsatz
- 14: Rahmenteil
- 15: Schwenkachse
- 16: Lenkstange
- 17: Antriebsanordnung
- 18: Tretkurbeltrieb
- 19: Übertragungsmittel
- 20: Antriebselement
- 21: Rollenkette
- 22: Antriebsanordnung
- 23: Antriebselement
- 24: Übertragungsmittel
- 25: Übertragungsvorrichtung
- 26: Übertragungsmittel
- 27: Antriebselement
- 28: Kardangelenk
- 29: Kupplungselement
- 30: Kupplungsteil
- 31: Kupplungsteil
- 32: Lagerelement
- 33: Lagerelement
- 34: Antriebselement
- 35: Antriebselement
- 36: Mittelachse
- 37: Mittelachse
- 38: Schnittpunkt
- 39: Distanzlasche
- 40: Distanzlasche
- 41: Doppelpfeil
- 42: Verkleidungselement
- 43: Hinterradnabe
- 44: Freilaufeinrichtung
- 45: Kupplungseinrichtung
- 46: Vorderradnabe
- 74: Übergangsbereich
- 75: Ansatz
- 76: Wellenstummel
- 77: Freiraum
- 89: Führungsanordnung
- 90: I-Profil
- 91: Befestigungselement
- 92: Rohrschelle
- 93: Ausnehmung
- 94: U-Profil
- 95: Steg
- 96: Distanz
- 97: Breite
- 98: Abstand
- 99: Freilaufeinrichtung

## Patentansprüche

1. Fahrrad (1), insbesondere geländegängiges Fahrrad, mit einem gegenüber einem Rahmenteil über eine Lenkstange (16) schwenkbaren Vorderrad (11) und einem, am Rahmenteil (3) drehbar gelagerten Hinterrad (5), welches über eine Schalteinrichtung und ein Antriebselement (20) mit einem Übertragungsmittel (19) eines Tretkurbelantriebes (18) gekuppelt ist, die eine Antriebsanordnung (17) für das Hinterrad (5) bilden und mit einer Antriebsanordnung (22) für das Vorderrad (11), die ein mit dem Vorderrad (11) drehbeweglich in Eingriff stehendes Übertragungsmittel (26) umfaßt, dadurch gekennzeichnet, daß die Antriebsanordnung (22) für das Vorderrad ein kardanisches Kupplungselement (29) aufweist, das im Bereich der Lenkstange (16) oder von die Lenkstange (16) mit dem Vorderrad (11) verbindenden Rahmenteilen (10, 14) angeordnet ist und welches einerseits mit dem Übertragungsmittel (26) für das Vorderrad (11) und anderseits mit einem weiteren Übertragungsmittel (24) im Eingriff steht, welches direkt mit einem mit dem Hinterrad (5) drehverbundenen Antriebselement (23) drehbeweglich und kraftschlüssig verbunden ist.

2. Fahrrad nach Anspruch 1, dadurch gekennzeichnet, daß eine Schwenkachse (15) der Lenkstange (16) für das Vorderrad (11) einen gemeinsamen Schnittpunkt mit Mittelachsen (36, 37) der Kupplungsteile (30, 31) des kardanischen Kupplungselementes (29) ausbildet und daß die Schwenkachse (15) und die Mittelachsen (36, 37) im rechten Winkel zueinander verlaufen und je ein Kupplungsteil (30, 31) beidseits der Schwenkachse (15) angeordnet ist.

3. Fahrrad nach Anspruch 1 oder 2, dadurch gekennzeichnet, daß Kupplungsteile (30, 31) des kardanischen Kupplungselements (29) über Lagerelemente (32, 33) drehbeweglich mit einem Rahmenteil (3, 14) des Fahrrades (1) und mit der Lenkstange (16) einer Lenkanlage für das schwenkbare Vorderrad (11) verbunden sind.

4. Fahrrad nach einem oder mehreren der Ansprüche 1 bis 3, dadurch gekennzeichnet, daß auf den Kupplungsteilen (30, 31) des kardanischen Kupplungselementes (29) Antriebselemente (34, 35), insbesondere Kettenräder, drehfest angeordnet sind.

5. Fahrrad nach einem oder mehreren der Ansprüche 1 bis 4, dadurch gekennzeichnet, daß die Antriebsanordnung (22) für das Vorderrad (11) zumindest das Antriebselement (23) des Hinterrades (5) und das Antriebselement (27) des Vorderrades (11) mit den beiden Antriebselementen (34, 35) des kardanischen Kupplungselementes (29) verbindende Übertragungsmittel (24, 26), insbesondere endlose Rollenketten (21) aufweist, und die Antriebselemente (23, 27) der Hinterrades (5) und des Vorderrades (11) durch Kettenräder gebildet sind.

6. Fahrrad nach einem oder mehreren der Ansprüche 1 bis 5, dadurch gekennzeichnet, daß die Antriebselemente (23, 27) des Hinterrades (5) bzw. des Vorderrades (11) über eine ausrückbare Kupplungseinrichtung (45) mit einer Hinterradnabe (43) des Hinterrades (5) bzw. Vorderradnabe (46) des Vorderrades (11) drehbeweglich verbunden sind.

7. Fahrrad nach einem oder mehreren der Ansprüche 1 bis 6, dadurch gekennzeichnet, daß zumindest ein Antriebselement (20, 23, 27) über eine Freilaufein-richtung (44) mit einer Radnabe des Vorder- und/ oder des Hinterrades (11, 5) verbunden ist.

8. Fahrrad nach einem oder mehreren der Ansprüche 1 bis 7, dadurch gekennzeichnet, daß die Antriebsanordnung (22) für das Vorderrad (11), insbesondere deren Übertragungsmittel (24, 26) innerhalb diese umfassende Verkleidungselemente (42) angeordnet sind.

9. Fahrrad nach einem oder mehreren der Ansprüche 1 bis 8, dadurch gekennzeichnet, daß die Verkleidungselemente (42) eine Führungsanordnung (89) für das Übertragungsmittel (24) bilden und aus einem abriebfesten Material mit einem niederen Reibungskoeffizienten, insbesondere einem Polyamid, PVC, etc. bestehen.

10. Fahrrad nach einem oder mehreren der Ansprüche 1 bis 9, dadurch gekennzeichnet, daß die Führungsanordnung (89) Befestigungselemente (91) zur bewegungsfesten Fixierung der Führungsanordnung (89) auf den rohrförmigen Rahmenteilen (3, 14), z.B. Rohrschellen aufweist.

11. Fahrrad nach einem oder mehreren der Ansprüche 1 bis 10, dadurch gekennzeichnet, daß die Antriebsordnung (17) für das Hinterrad (5) und die Antriebsanordnung (22) für das Vorderrad (11) in parallel und in einer geringen Distanz (96) zueinander verlaufenden Ebenen angeordnet sind.

12. Fahrrad nach einem oder mehreren der Ansprüche 1 bis 11, dadurch gekennzeichnet, daß das Antriebselement (23) der Antriebsanordnung (22) für das Vorderrad (11) über eine Freilaufeinrichtung (99) auf der Achse (8) für das Hinterrad (5) gelagert ist.

13. Fahrrad nach Anspruch 1 oder 2, dadurch gekennzeichnet, daß das kardanische Kupplungselement (29) mit einem der Lagerelemente (32, 33) drehbeweglich in einem C-förmig ausgebildeten Übergangsbereich in zwischen einem gabelförmigen Rahmenteil (10) für das Vorderrad (11) und einem die Lenkstange (16) aufnehmenden Fortsatz (13) drehbeweglich gelagert ist, und das weitere Lagerelement (32, 33) in einer mit einem Rahmenteil (3, 14) des Fahrrades (1) bewegungsfest verbundenen Distanzlasche (40) drehbeweglich gelagert ist.

## Claims

1. Bicycle (1), in particular all-terrain bicycle, with a front wheel (11) which can be pivoted relative to a frame portion by a handlebar (16) and with a rear wheel (5) which is mounted rotatably on the frame portion (3) and which is coupled by a shift device and a drive element (20) to a transmission means (19) of a pedal crank drive (18), which form a drive arrangement (17) for the rear wheel (5), and with a drive arrangement (22) for the front wheel (11) which includes a transmission means (26) rotatably engaged with the front wheel (11), characterised in that the drive arrangement (22) for the front wheel comprises a cardan coupling element (29) which is arranged in the region of the handlebar (16) or of frame portions (10, 14) connecting the handlebar (16) to the front wheel (11) and which is engaged on the one hand with the transmission means (26) for the front wheel (11) and on the other hand with a further transmission means (24) which is directly connected rotatably and in force-locking relationship to a drive element (23) rotatably connected to the rear wheel (5).

2. Bicycle according to claim 1, characterised in that a pivot axis (15) of the handlebar (16) for the front wheel (11) forms a common point of intersection with centre axes (36, 37) of the coupling portions (30, 31) of the cardan coupling element (29) and in that the pivot axis (15) and the centre axes (36, 37) extend at right angles to each other and one coupling portion (30, 31) is arranged on either side of the pivot axis (15).

3. Bicycle according to claim 1 or 2, characterised in that coupling portions (30, 31) of the cardan coupling element (29) are connected by bearing elements (32, 33) rotatably to a frame portion (3, 14) of the bicycle (1) and to the handlebar (16) of a steering system for the pivotable front wheel (11).

4. Bicycle according to one or more of claims 1 to 3, characterised in that on the coupling portions (30, 31) of the cardan coupling element (29) are non-rotatably mounted drive elements (34 , 35), in particular sprockets.

5. Bicycle according to one or more of claims 1 to 4 , characterised in that the drive arrangement (22) for the front wheel (11) comprises transmission means (24, 26), in particular endless roller chains (21), connecting at least the drive element (23) of the rear wheel (5) and the drive element (27) of the front wheel (11) to the two drive elements (34, 35) of the cardan coupling element (29), and the drive elements (23 , 27) of the rear wheel (5) and of the front wheel (11) are formed by sprockets.

6. Bicycle according to one or more of claims 1 to 5, characterised in that the drive elements (23, 27) of the rear wheel (5) and of the front wheel (11) are rotatably connected by a releasable coupling device (45) to a rear wheel hub (43) of the rear wheel (5) and a front wheel hub (46) of the front wheel (11) respectively.

7. Bicycle according to one or more of claims 1 to 6, characterised in that at least one drive element (20, 23, 27) is connected by a freewheel device (44) to a wheel hub of the front and/or rear wheel (11, 5).

8. Bicycle according to one or more of claims 1 to 7, characterised in that the drive arrangement (22) for the front wheel (11), in particular the transmission means thereof (24, 26), are arranged inside covering elements (42) encompassing the latter.

9. Bicycle according to one or more of claims 1 to 8, characterised in that the covering elements (42) form a guide arrangement (89) for the transmission means (24) and are made of an abrasion-proof material with a low coefficient of friction, in particular a polyamide, PVC, etc.

10. Bicycle according to one or more of claims 1 to 9, characterised in that the guide arrangement (89) comprises fastening elements (91) for immovably fixing the guide arrangement (89) on the tubular frame portions (3, 14), e.g. pipe clamps.

11. Bicycle according to one or more of claims 1 to 10, characterised in that the drive arrangement (17) for the rear wheel (5) and the drive arrangement (22) for the front wheel (11) are arranged in planes extending parallel to and at a short distance (96) from each other.

12. Bicycle according to one or more of claims 1 to 11, characterised in that the drive element (23) of the drive arrangement (22) for the front wheel (11) is mounted by a freewheel device (99) on the axle (8) for the rear wheel (5).

13. Bicycle according to claim 1 or 2, characterised in that the cardan coupling element (29) is mounted rotatably with one of the bearing elements (32, 33) in a C-shaped transition region between a forked frame portion (10) for the front wheel (11) and an extension (13) which receives the handlebar (16), and the further bearing element (32, 33) is mounted rotatably in a distance plate (40) connected immovably to a frame portion (3, 14) of the bicycle (1).

## Revendications

1. Bicyclette (1), notamment bicyclette tout terrain, avec une roue avant (11) pivotante par rapport à une partie de châssis par un guidon (16) et une roue arrière (5) logée à rotation à une partie de châssis (3) qui est accouplée par un dispositif de commutation et un élément d'entraînement (20) à un moyen de transmission (19) d'une commande de pédalier (18), qui constituent un dispositif d'entraînement (17) pour la roue arrière (5) et avec un dispositif d'entraînement (22) pour la roue avant (11) qui comporte un moyen de transmission (26) en prise de rotation avec la roue avant (11), caractérisée en ce que le dispositif d'entraînement (22) pour la roue avant présente un élément d'accouplement (29) à cardan qui est disposé au voisinage du guidon (16) ou des parties de châssis (10, 14) reliant le guidon (16) à la roue avant (11) et qui est en prise d'une part avec le moyen de transmission (26) pour la roue avant (11) et d'autre part avec un moyen de transmission supplémentaire (24) qui est relié à rotation et par force directement à un élément d'entraînement (23) relié à rotation à la roue arrière (5).

2. Bicyclette selon la revendication 1, caractérisée en ce qu'un axe de pivotement (15) du guidon (16) pour la roue avant (11) constitue un point d'intersection commun avec des axes médians (26, 27) des parties d'accouplement (30, 31) de l'élément d'accouplement à cardan (29), et en ce que l'axe de pivotement (15) et les axes médians (36, 37) s'étendent à angle droit l'un relativement à l'autre et en ce qu'un élément d'accouplement (30, 31) est disposé respectivement des deux côtés de l'axe de pivotement (15).

3. Bicyclette selon la revendication 1 ou 2, caractérisée en ce que les parties d'accouplement (30, 31) de l'élément d'accouplement à cardan (29) sont reliées par des éléments de palier (32, 33) de façon rotative à la partie de châssis (3, 14) de la bicyclette (1) et au guidon (16) d'une installation de guidage pour la roue avant pivotante (11).

4. Bicyclette selon l'une ou plusieurs des revendications 1 à 3, caractérisée en ce que sont disposés sur les éléments d'accouplement (30, 31) de l'élément d'accouplement à cardan (29) de façon immobile en rotation des éléments d'entraînement (34, 35), notamment des roues dentées.

5. Bicyclette selon l'une ou plusieurs des revendications 1 à 4, caractérisée en ce que le dispositif d'entraînement (22) pour la roue avant (11) présente au moins l'élément d'entraînement (23) de la roue arrière (5), et l'élément d'entraînement (27) de la roue avant (11) a des moyens de transmission (24, 26), notamment des chaînes à rouleaux (21) sans fin, établissant une liaison avec les deux éléments d'entraînement (34, 35) de l'élément d'accouplement à cardan (29), et que les éléments d'entraînement (23, 27) de la roue arrière (5) et de la roue avant (11) sont constitués par des roues dentées.

6. Bicyclette selon l'une ou plusieurs des revendications 1 à 5, caractérisée en ce que les éléments d'entraînement (23, 27) de la roue arrière (5) et, respectivement de la roue avant (11) sont reliés à rotation par un dispositif d'accouplement pouvant être désembrayé (45) avec un moyeu de roue arrière (43) de la roue arrière (5) et, respectivement un moyeu de roue avant (46) de la roue avant (11).

7. Bicyclette selon l'une ou plusieurs des revendications 1 à 6, caractérisée en ce qu'au moins un élément d'entraînement (20, 23, 27) est relié par un dispositif d'axe libre (44) à un moyeu de roue de la roue avant et/ou de la roue arrière (11, 5).

8. Bicyclette selon l'une ou plusieurs des revendications 1 à 7, caractérisée en ce que le dispositif d'entraînement (22) pour la roue avant (11), notamment les moyens de transmission (24, 26) de celui-ci sont disposés dans des éléments d'habillage (42) entourant ceux-ci.

9. Bicyclette selon l'une ou plusieurs des revendications 1 à 8, caractérisée en ce que les éléments d'habillage (42) constituent un dispositif de guidage (89) pour le moyen de transmission (24) et sont constitués en un matériau résistant à l'usure d'un faible coefficient de frottement, notamment en un polyamide, PVC, etc.

10. Bicyclette selon l'une ou plusieurs des revendications 1 à 9, caractérisée en ce que le dispositif de guidage (89) présente des éléments de fixation (91) pour la fixation immobile du dispositif de guidage (89) sur les parties de châssis tubulaires (3, 14), par exemple des colliers d'attache.

11. Bicyclette selon l'une ou plusieurs des revendications 1 à 10, caractérisée en ce que le dispositif d'entraînement (17) pour la roue arrière (5) et le dispositif d'entraînement (22) pour la roue avant (11) sont disposés dans des plans s'étendant parallèlement et à une faible distance (96) l'un relativement à l'autre.

12. Bicyclette selon l'une ou plusieurs des revendications 1 à 11, caractérisée en ce que l'élément d'entraînement (23) du dispositif d'entraînement (22) pour la roue avant (11) est logé par un dispositif d'axe libre (99) sur l'axe (8) de la roue arrière (5).

13. Bicyclette selon la revendication 1 ou 2, caractérisée en ce que l'élément d'accouplement à cardan (29), avec l'un des éléments de palier (32, 33) est logé à rotation dans une zone de transition réalisée en forme de C- entre une partie de châssis en forme de fourche (10) pour la roue avant (11) et un prolongement (13) recevant le guidon (16), et en ce que l'élément de palier supplémentaire (32, 33) est logé à rotation dans une languette d'écartement (40) reliée immobile en rotation à une partie de châssis (3, 14) de la bicyclette (1).
